# EUROPEAN PATENT APPLICATION

(11) **EP 2 866 407 A1**
(43) Date of publication of application: **29.04.2015**
(21) Application number: 14001503.3
(22) Date of filing: 28.04.2014
(51) Int. Cl.: H04L 29/06

(54) **Protection of automated control systems**

(30) Priority: 27.10.2013 US 201314064152
(71) Applicant: Saprygin, Konstantin, 125252 Moscow (RU)
(72) Inventor: Saprygin, Konstantin, 125252 Moscow (RU)
(74) Representative: Grünecker Patent- und Rechtsanwälte PartG mbB

(57) **Abstract**

A security module is disclosed which may provide security to an automated control system (ACS). The security module comprises a processor module and at least one communication module. The at least one communication module may be connected with the ACS. The processor module may receive data from the ACS via the at least one communication module and detects information data and addresses within the received data. Then, the processor module may determine whether the received data results from unauthorized access to the ACS based on the detected information data and addresses.

## Description

### BACKGROUND OF THE INVENTION

### 1. Field of the Invention

The invention generally relates to automation controls systems, and more particularly to providing security to the control networks of automated control systems.

### 2. Description of the Related Art

Automated control systems (ACSs) are widely used for controlling various processes, for example technological processes at production sites or processes used at smart houses or buildings. These systems typically include hardware and software means for automated control of such processes and of equipment involved in such processes.

For example, automated control systems used in industrial environments such as production sites equipped with automated production lines (i.e., a plant or a factory) typically provide control and monitoring of various modules and subsystems of the automated production lines and other automated systems at the production site.

In another example, automated control systems used at smart buildings typically control power supplies, an alarm system, a lighting system, a video surveillance system, an air conditioning system, a heating system, etc.

Additionally, the automated control system can be responsible for access control to the production site or the building. Some sophisticated ACSs can be used for complex engineering objects that have a strategic importance for a country. For example, the ACSs can be used for nuclear (or hydroelectric) power plants, places of mass gathering of people, such as, for example, airports, train stations, malls, military bases, etc.

The current ACSs exhibit several problems regarding unauthorized access. In particular, the conventional systems do not have any means for detecting that any unauthorized devices or systems (i.e., devices that are not declared as authorized devices) are connected to a given ACS. Furthermore, there are no anti-virus (AV) applications that are adopted for use in the ACSs. The conventional AV applications are not reliable within ACSs, since they are mainly designed for different types of threats. Accordingly, current ACSs are not protected from problems rising from malware and/or computer virus threats.

Furthermore, in complex ACSs such as automated process control systems (APCSs) employed in industrial environments, equipment and data transmission lines used in production lines need to be protected from an unauthorized access. Such an unauthorized access can be used in order to collect the transmitted data including operation parameters of the automated system components. The data can be blocked, or falsified by an intruder. Furthermore, the intruder can destroy system equipment and software by activating some hardware bugs in the equipment. The intruder can also send control commands or change configurations in order to change operational parameters of the system components and equipment. In this way, the intruder can affect technological processes and damage the equipment (for example by changing process parameters or other conditions of the process), the environment or safety and security of the site (for example by activating or deactivating locks and alarms). Also, an intruder can access the data transmission lines directly (by physical access to the lines or to the equipment) or by accessing the data transmission lines through indirect intrusion systems using hardware and software means.

The remote access to the system equipment and components can be implemented from control computers, such as supervisory control and data acquisition (SCADA) systems. The remote access can also be implemented from the intermediate nodes located between the control computers and the field equipment. For example, programmable logical controllers, network equipment and I/O systems can be affected by an unauthorized access. Additionally, an intruder can have a remote access from devices connected to the intermediate nodes and directly to the data transmission lines. As conventional firewalls and AV protection systems are only effective against known viruses and malware directed to software modules, they provide no protection against intrusions and unauthorized access threats directed to different components of the complex APCS. In other words, the SCADA portion (i.e., the highest level) of the APCS can be partly protected by conventional AV means, but not the lower levels of the APCS. That is, conventional APCSs do not protect data channels and logical controllers against intrusions.

Accordingly, there is a need in the art for an efficient and effective protection of automated (process) control systems against intrusions and unauthorized access. It is the object of the invention to improve the security of automated (process) control systems. The object is solved by the subject matter of the independent claims. Preferred embodiments of the present invention are defined by the dependent claims.

### SUMMARY OF THE INVENTION

A security module is disclosed which may provide security to an ACS. The security module comprises a processor module and at least one communication module. The at least one communication module may be connected with the ACS. The processor module may receive data from the ACS via the at least one communication module. The received data may comprise information data and addresses. For example, the information data may comprise technological process data corresponding to technological processes. The process data may relate to conditions of technological processes. These conditions may, for example, represent process parameters such as parameters related to the actual control of the technological processes and/or the equipment used in the technological processes.

Also, the aforementioned data may comprise command data, for example instructions for an intended recipient. The addresses may comprise IP or MAC addresses of a sender and an intended recipient. Then, the processor module may determine, based on the detected information data and addresses, whether the received data results from unauthorized access to the ACS.

The security module can be connected with the ACS at various points such as points of potential vulnerability. For example, the security module may be connected to one of a logic controller of the ACS, a field device of the ACS, a supervisory control and data acquisition entity of the ACS, or with data transmission lines between such a supervisory control and data acquisition entity, such a logic controller or such a field device. Also, a plurality of security modules may be connected with the ACS at a plurality of different points of the ACS such as supervisory entities, logic controllers, field devices and data transmission lines.

The communication module may comprise a logic module for converting a first data format of the data received from the ACS into a second data format used by the processor module, wherein the first data format corresponds to an industrial protocol used for data communications within the ACS at the specific point of the ACS at which the communication module is connected with the ACS. The security module may also comprise further communication modules, wherein each of the communication modules is adapted to a different industrial protocol used for data communications within the ACS. This modular architecture of the security module allows for an easy adaption of the security module with minimum costs by developing and attaching a new communication module in case an industrial protocol used by the ACS is changed or modified. Also, the respective programs used by the processor module may be easily adapted without changing the architecture of the security module.

In case the received data results from unauthorized access, the processor module may send control signals to an ACS equipment corresponding to the detected address data to instruct said equipment to disregard the respective data. Alternatively, the processor module may prevent that the respective data are forwarded. Also, the security module may introduce noise into data lines of the ACS to disrupt the communication of the related data. Furthermore, the security module may notify a server computer and/or a monitoring device. Also, the security module, the monitoring device and/or the server may send notification signals to an operator interface, maintenance personnel, and/or alarm devices.

Furthermore, the security module may comprise a connection module for communicating at least a part of the received data and detected command and address data to a monitoring device. The monitoring device may be a server to which a plurality of security modules is connected. The server may perform a further threat analysis based on the data received from the plurality of security modules.

Furthermore, the security module may log security events derived from the received data and communicate the logged security events to a server and/or a monitoring device.

The security module may be implemented as a standalone device with an optional control panel. For example, the security module may comprise a user interface module including one or more of a display screen, a keyboard interface, a touch panel and a touch screen.

The security module may be connected to data transmission lines of the ACS via a tee branch or in serial, for example by routing the data transmission line through the security module. Also, the security module may be directly connected to an ACS device or to a multitude of ACS devices in parallel to the ACS data transmission line.

Furthermore, the security module may determine that the received data results from unauthorized access if the received data comprise information data and/or addresses that are not comprised in a list of allowed information data and/or addresses. Furthermore, the security module may determine that the received data results from unauthorized access if the received data comprise information data and/or addresses that are comprised in a blacklist comprising disallowed information data and/or addresses. Also, the security module may determine that the received data results from unauthorized access if the detected address data correspond to an unregistered device, or if the received data are in a data format that does not comply with a predetermined protocol.

Furthermore, the security module may be operated in a slave mode or in a master mode. In the slave mode, the received data may be analyzed to determine a set of allowed instruction data and/or address data. In the master mode, it may be determined that the received data result from unauthorized access if the received data comprises information data and/or addresses that are not comprised in the set of allowed information data and/or addresses.

The modular architecture of the security module allows for an easy adaption of the security module to different automation environments. Accordingly, a security module according to the present disclosure may be used in ACSs for smart homes, smart buildings and smart vehicles such as cars, and also in more complex ACSs such as APCSs for factory/production sites.

A protection system for the APCS may include a plurality of security modules, which may be implemented as anti-intrusion (PAI) modules (see below). The PAI modules may be located at potential vulnerability points of the APCS, namely at levels below SCADA. The PAI modules may be used for: analyzing a system for presence of un-authorized devices or un-authorized connections; detection of undocumented (i.e., undeclared) devices and suspicious commands from connected devices; filtering various types of activities (i.e., wrong packets, such as packets sent to nonexistent addresses, or containing erroneous checksums or parity bits, or packets that are a priori known to lead to malicious or destructive consequences, unidentified activities, such as prohibited commands, or commands prohibited at a current moment in time, or commands sent from an address or device that is not authorized to send such a command (ever or at a current moment), certain types of commands, such as commands to turn off the system, commands to program the logic controller, etc.); analyzing different network layers of the OSI stack for unauthorized data transmissions; and maintaining device behavior (including heuristic) logs.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 illustrates an exemplary embodiment in which security techniques according to the present disclosure are applied in an APCS environment;
FIG. 2 illustrates an exemplary embodiment of a security device according to an embodiment of the present invention;
FIG. 3 illustrates an exemplary embodiment in which programmable anti-intrusion modules (PAIs) are connected to an APCS control network according to an embodiment of the present invention;
FIG. 4 illustrates an exemplary application of a security device to different levels of the APCS network according to an embodiment of the present invention;FIG. 5 illustrates different exemplary methods of connecting PAIs to APCS data lines and/or equipment according to an embodiment of the present invention;
FIG. 6 illustrates an exemplary architecture of a PAI module according to an embodiment of the present invention;
FIG. 7 illustrates an exemplary embodiment in which security techniques according to the present disclosure are applied to an APCS environment in different modes of operation;
FIG. 8 illustrates an exemplary logical structure of a security system for APCS according to an embodiment of the present invention;
FIG. 9 illustrates an exemplary logical structure of a security device according to an embodiment of the present invention; and
FIG. 10 illustrates an exemplary logical structure of a security server according to an embodiment of the present invention.

### DETAILED DESCRIPTION OF THE INVENTION

The illustrative embodiments of the present invention will be described with reference to the figure drawings wherein like elements and structures are indicated by like reference numbers.

As will be described in more detail below, embodiments of the present invention allow for protection of ACSs for smart homes, smart buildings and smart vehicles such as cars, and also for more complex ACSs such as APCSs for factory/production sites.

ACSs in "smart houses" are used for example for automation of power lines, climatic systems, doors, gates, etc. Such systems usually employ a plurality of sensors (i.e. light sensors, sensors of temperature and pressure, etc.). ACSs in "smart buildings" are further used for automation of lifts, escalators, travelators, lamps, conditioners and ventilation systems, access control systems, CCTV and others.

ACSs for industrial objects such as factory plants / production sites are typically more complex. Such systems are named Automation Process Control Systems (APCSs) or Industrial Control Systems (ICSs). For APCSs, criterions like maximum reliability, sensitivity to the certain time intervals and accurate process logic execution are typically of high importance.

The present invention may be practiced in typical ACS as well as typical APCS environments.

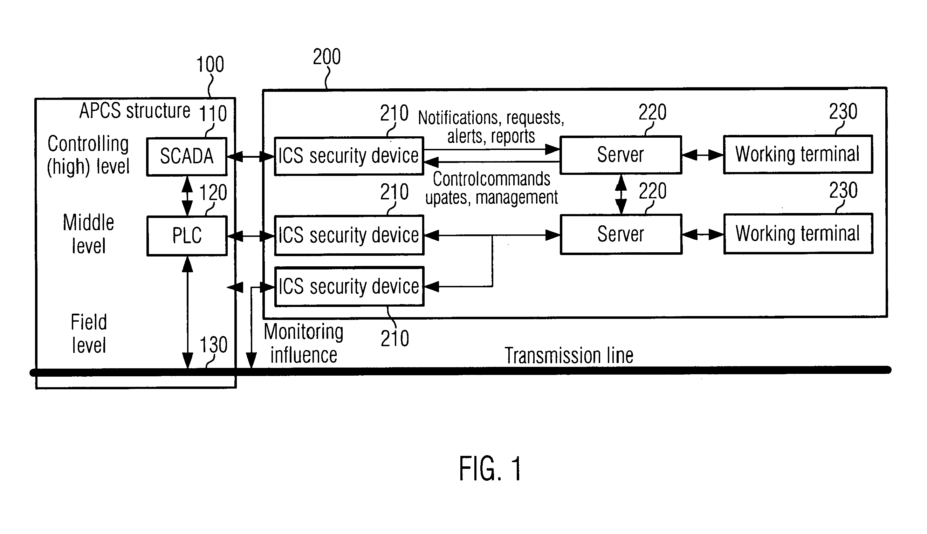

For example, FIG. 1 illustrates an embodiment in which security techniques according to the present disclosure are applied in an APCS environment.

FIG. 1 shows a typical APCS (100) environment. The topmost controlling level of the APCS is provided by a supervisory control and data acquisition entity, SCADA (110), which runs on conventional, although often outdated, computer hard- and software. At the SCADA level, protection may be implemented by conventional corporate IT security measures, including firewalls, antivirus software, unified threat management (UTM) boxes and suchlike.

Below the SCADA level, there is the actual control network. This control network is characterized by vastly different requirements than the upper level which is often implemented by TCP/IP based computer networks. In particular, it has much stronger requirements on timing, determinism and reliability. To this end, many protocols for industrial automation have been created over the decades, and most of them are still in use due to the long lifetimes of the production equipment.

The control network consists of two levels: the middle level, containing programmable logic controllers (PLCs) (101) that implement closed-loop control on the field equipment, and the field level, containing the interfaces that collect data from and command the actual equipment (pumps, switches, sensors, etc.). The requirements on the data transmission and reliability, as well as the capabilities of the equipment involved differ greatly between these levels. Therefore, on different levels, different protocols (for example, Fieldbus, Industrial Ethernet, Modbus, Profibus, HART, BACnet, LonWorks, EtherCAT, DeviceNet, Profinet, Foundation Fieldbus, CANopen, Interbus etc.), some analog and some digital, some serial, some Ethernet-based, some open, some proprietary, may be employed, and the protocols differ from vendor to vendor. Also, the protocols used on the field level usually have strict real-time requirements. The devices on a field level bus are often synchronized and are given time intervals in the order of milliseconds. Due to the strict timing requirements and various different protocols on this level, traditional network filters using a store-and-forward approach and speaking only one protocol (usually TCP/IP) do not work on this level.

The APCS can include separate automated process control systems (APCS) and automated devices aggregated into one system. The APCS can include SCADA systems, distributed control systems, programmable logic controllers, as well as smaller systems based on microcontrollers. The APCS has a single operation control system (or, in some cases, multiple control systems, which can be independent or one or more can be slaved to others for controlling the technological process in a form of one or several control centers. The APCS also includes data processing and archiving means for storing the technological process-related data. The APCS also includes sensor/gauges, control modules and executive modules. All of the sub systems of the APCS are connected over the networks.

The logical controllers control field level equipment (i.e., production lines, turbines, reactors, etc.) and other logical sub-controllers, execution modules (such as, for example, machines, industrial robots, production lines, turbines, etc.) and collects data from the sensors/gauges and provides data to the SCADA for aggregation and processing. The functionality of the logical controller is provided by an application developed by SCADA tools (or any other programmable module).

The logical controller has modules for digital and analog I/O. The controller has the interface modules for connecting to sensors/gauges and other system modules using special industrial data transmission protocols. The field level has sensors/gauges and executive modules supporting industrial data transmission protocols (such as, for example, Industrial Ethernet, Modbus, Profibus, HART, BACnet, LonWorks, EtherCAT, DeviceNet, Profinet, CANopen, Fieldbus, etc.)

The APCS (100) is subject to various threats. The threats can be active and passive. The passive threats do not affect the structure of the automated systems. The passive threats can steal data without falsification and distruction of the functionality of the APCS. The active threats (if executed) can potentially change the structure of the automated control systems. For example, unauthorized copying of the files is a passive threat, as well as stealing the personal data, passwords, determining the topology of the network remotely or generating a full map of the network. The passive threats affect the security of the data since the data becomes accessible by an unauthorized person. Some of the threats intentionally change or compromise the integrity of control data used by the APCS. In some cases the threats intend to block user access to a system resource. Thus, the user cannot access some system components and the functionality of the APCS is affected if not destroyed.

Some of these threats are presented from unauthorized devices in the network. Some of the threats to the APCS network are related to unintentional or malicious changes to the system's operational parameters that would cause harm to the field equipment. Also, the threats to the APCS network can be active (aiming to harm the equipment, to make unauthorized use of the equipment, for example triggering a fire alarm, or to prohibit authorized use of the equipment for example by triggering a fault switch) or passive (aiming to steal trade secrets, passwords or personal files, or trying to find out the network topology from remote). Also, malicious software introduced at the SCADA level, e.g. via the office network or USB drives, can be used to re-flash the PLCs with compromised control routines that change the control parameters of the field equipment but send back forged, normal-looking data to the SCADA level. Attacks like these can be used to wear out the field equipment over time and probably succeed if they do not match the known virus signatures of the office network's virus filter. So, with SCADA level as the only line of defense, the system is highly vulnerable.

In order to overcome such security problems, FIG. 1 shows a hardware-software complex HSC (200) which provides security to the APCS (100) according to a preferred embodiment of the present invention. The HSC (200) preferably protects all levels of the APCS network. In particular, protection is provided by providing dedicated security devices (210) and an associated security server (220) and working terminal (230) for the lower levels of the control network. This is particularly important since the currently used hard- and software in the middle and field layers does not employ any security measures but rather relies on physical security or security by obscurity of the protocols used. Also, the PLCs and field equipment interfaces are usually not able to implement modern encryption or authentication protocols since they were especially designed for the task of industrial control. Besides, trying to patch an existing industrial control system with new software can easily lead to disaster due to bugs in said new software.

Like the traditional security solutions on the upper layers, the security devices (210) may protect the system from various threats by intentional or unintentional harmful commands, or by unauthorized devices introduced into the network. Also, the malicious effects of malware, which was not detected by antivirus software employed on the SCADA level, can be detected and blocked on lower levels by one or more of the security devices (210), thus implementing security in depth.

The security devices (210) are able to log communication in the control network, raise alarms to the security server (220) or terminal (230) if unauthorized devices and/or harmful commands are detected, and block said commands (and, optionally, any subsequent command from the same source) if necessary. They are also able to coordinate their efforts via the security server (220) by notifying the server about security events and receiving updates and control commands from the server. The security server (220) is in turn able to exchange data (e.g. alert status) with a top-level security server of the APCS.

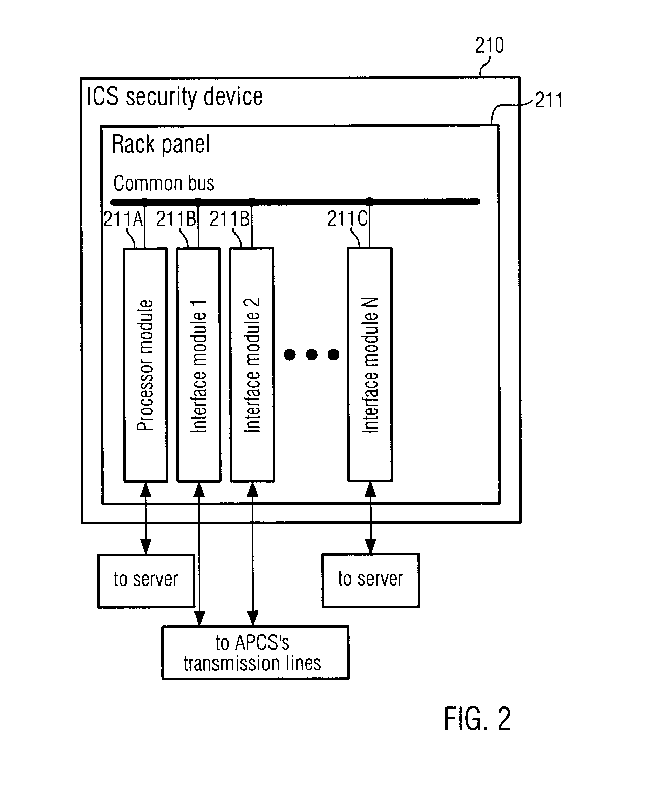

In addition to the security devices (210), the HSC (200) may also include traditional SCADA level security as well as background analysis of the protocols and hardware used. An example of an architecture of a security device (210) is illustrated in FIG. 2. The modular architecture shows the security device (210) may consist of a rack panel (211) with a common device connection bus to which various modules (211A, 211B, 211C) may be attached, in particular a processor module (211A) and various communication or interface modules (211B, 211C). The processor module may be used to process the data obtained from the interface modules. The interface modules (211 B) may be used to connect to the APCS transmission lines (130) at a given point and according to a predetermined protocol, depending on the configuration of the interface module (211A). The interface module N (211C) may be used to exchange data with a security server (220). This modular architecture of the security device (210) allows for adapting the security device to modified or different environments by developing and attaching a new interface module and if needed making slight changes in the software of the processor module.

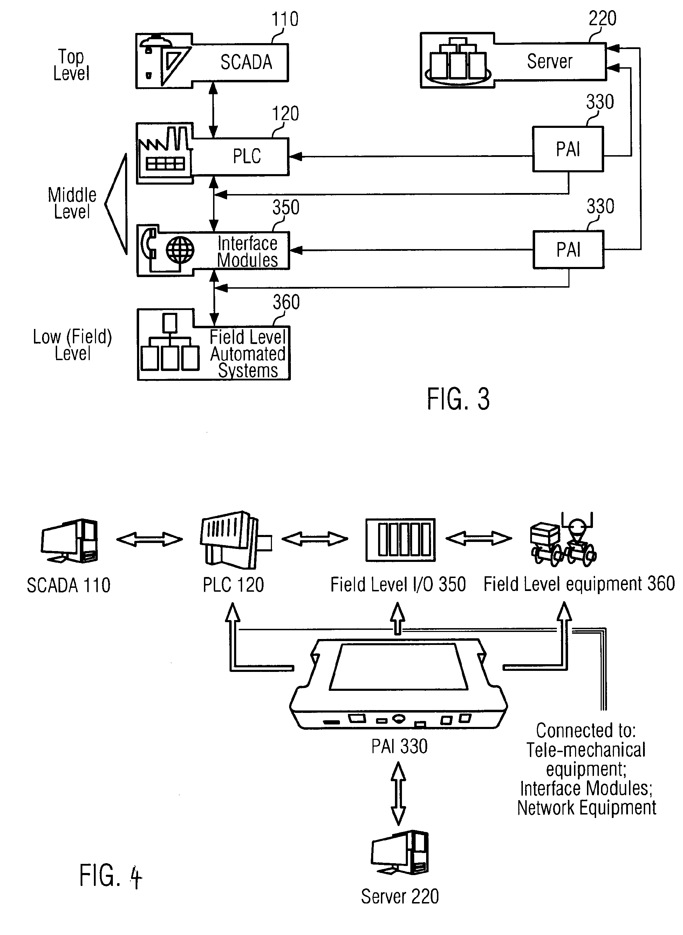

FIG. 3 shows an embodiment in which additional security is provided to the middle and low levels of an APCS. Security devices may be implemented as programmable anti-intrusion (PAI) modules (330). Each PAI module may be implemented as a portable device, as a server based system, or as a stationary system based on a personal computer. An example for the application of a portable PAI module to the different levels of an APCS is illustrated in FIG. 4. As can bee seen, the portable PAI device (330) may be connected to the PLC (120) as well as to the field level interfaces (350) and the field level devices themselves (360). Each of these connections may be achieved according to a different, equipment-specific protocol.

The PAI modules (330) may be configured to connect to the control network at different points (equipment and transmission lines) and according to different protocols. In particular, the PAI modules (330) may be configured to connect to the PLCs (120), the field level interfaces (350) and to the data transmission lines (130).

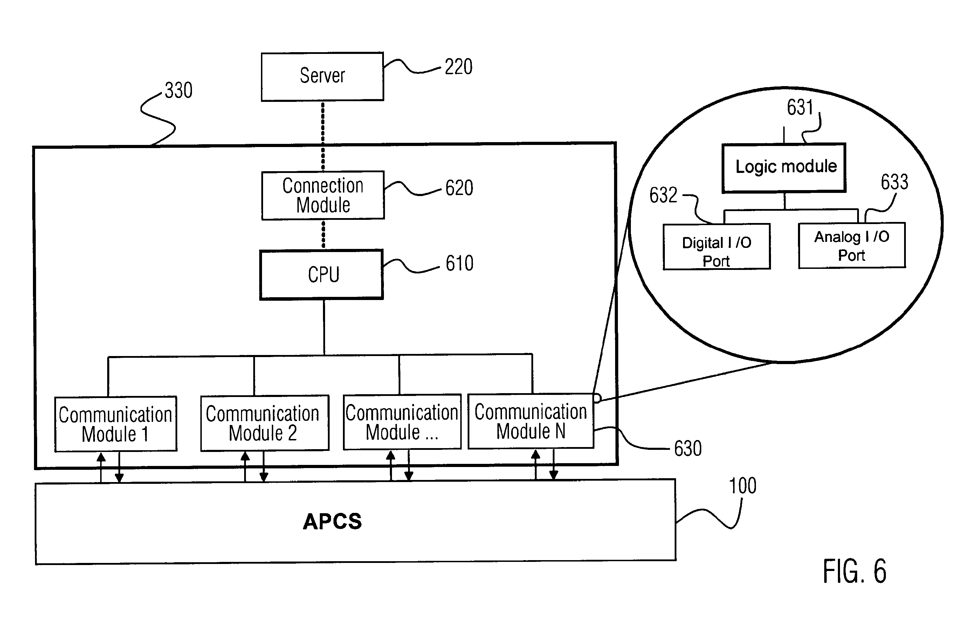

The PAI modules (330) have the capabilities to analyze and log the behavior of the attached equipment and influence it as needed, based for example on an onboard representation of blocking lists, templates and state machines, or on direct control signals. Also, the PAI modules (330) may be equipped to connect to and exchange data with a server (220). The server (220) may be able to aggregate and process the collected data, e.g. to compile lists of normal system behavior, which may be used to revise the PAIs blocking lists and templates. The server (220) may be also able to communicate with the SCADA level (110), a corporate security server, and the operators to implement a more global security policy. Also, the server may be capable of sending control commands (for example for switching between different operation modes, e.g. between slave, master and full modes as described in more detail wit reference to FIG. 6) or software updates to the PAI modules (330). Communication between the PAI module (330) and the server (220) may be implemented over existing data transmission lines, TCP/IP, wireless, protected cellular lines, a satellite channel, etc.

Not all of the PAIs (330) have to be connected to the security server (220). For example, if they are operating in a remote location, the server connection is physically unfeasible. On the other hand, in smaller automation environments like cars (CANBus vehicles) or building automation, due to the absence of cyber security personnel and the small number of PAI modules involved, the security server (220) may be unnecessary. If not connected to a server (220), the PAI (330) may have its own processing capabilities and may be accessed via an integrated (optional) or attached control panel.

In particular, the PAIs (330) may be used for:
- Analyzing the system for the presence of unauthorized devices or unauthorized connections. This may be done, for example, based on the MAC addresses of the sender or recipient, by detecting data flow that does not fall into the timing pattern of the system's regular operation, or by detecting out-of-protocol modulations.
- Analyzing the connections on different layers of the OSI stack, from physical layer (signal levels) over data link layer (e.g. MAC addresses) to application layer (commands).
- Comparing the data packets on different levels of the network (e.g. comparing the sensor input from the field equipment (360) with the data sent from the PLC (120) to the SCADA (110) level), thus guaranteeing integrity of the intermediate modules.
- Detecting undocumented devices and suspicious commands from connected devices, for example an unauthorized or malicious attempt to re-flash a PLC (120), or a command that is known to cause damage to the connected equipment (360). Hereby the malicious re-flash attempt may be detected by signatures, atypical data blocks, suspicious literals, an unauthorized MAC address, decompilation etc.
- Filtering various types of activities such as malformed packets or packets containing suspicious commands.
- Providing encryption, decryption and authentication facilities for control commands over long data transmission lines which may be easily physically accessed by intruders.
- Maintaining device behavior logs, creating heuristics for acceptable and unacceptable behavior.

PAI modules (330) may be used to control the data stream on different levels of the APCS: between the SCADA (110) level and the logical controller (120), between the logical controller (120) and the field level interfaces (350) (e.g. bus controllers), or between the interfaces (350) and the equipment (360)

A PAI module (330) working in any mode may check the addresses of the sending and receiving devices and may detect undocumented devices connected to the transmission lines. It may also check the data in terms of falsification, unauthorized updates or possible blocking of users or devices. It may also detect commands that are not allowed, e.g. commands that could harm or prevent authorized access to the field equipment (360). Additionally, the PAI module (330) may check the data against templates containing expected behavior patterns, expert assessments or state graphs. These templates may be either provided by the server (220) or provided by the PAI module itself during a self-teaching phase. Also, the PAI (330) may be used to protect the system by allocating only certain time periods (from seconds to hours) for certain tasks like writing data. If the PAI (330) is working in slave mode, the suspicious actions will be logged, and the security server and/or security operator may be notified.

A PAI module (330) working in master mode may also block identified un-allowed or suspicious commands by instructing the controlled device to disregard harmful commands. A PAI module (330) working in full mode may block previously identified suspicious or un-allowed commands by acting as a network filter that refuses to forward the harmful command, or by phsically introducing noise into the data line to mask the command to be blocked. Which means of control may be used depends on the implementation of the PAI module (330) and the topography of the control network.

In another embodiment according to FIG. 3, programmable anti-intrusion modules (PAI) (330) are positioned between the processing server (220) and the logical controller (120) and between the processing server (220) and the APCS interface modules (350). Note that the processing server (220) is optional, and can be connected to only a portion of the PAIs, or may be absent completely. In this case, the PAI has its own processing capacity, for example, using desktops, or HMI panels. The PAI (330) positioned between the processing server (220) and the logical controller (120) is connected to the logical controller (120) for controlling the incoming data stream from the control level (i.e., SCADA) (110). The data stream can be implemented using an industrial protocol. The data stream contains the control commands and data for the field level devices. The control of the data stream can be implemented by means of the industrial protocol or by hardware implementation for introducing noise into the signals depending on the implementation of the PAI module. Additional interfaces may be used to connect to the data stream, for full or partial duplication of the data being processing, or other auxiliary PAI data, for verification. The data stream can be blocked by the logical controller or by the SCADA. The logical controllers can have some special scripts for processing data. Another PAI module (330) is connected to the controller bus for controlling the out-going data stream directed to the interface modules (350). Another PAI module (330) is connected to the field-level data lines for controlling the incoming stream directed to the field level equipment (360). The data acquired by the PAI (330) modules are processed by the server (220).

According to this exemplary embodiment, if some malware is not detected by the AV modules in the SCADA system, the PAI module (330) detects an abnormality in the data incoming into the logical controller (120) and blocks it from penetrating into the field level. The malware detection can include checking for legitimacy of the sender and receiver addresses, detecting unusual or forbidden commands, controlling electrical parameters of the network and detecting the abnormalities, comparing data packets from different layers of the network, etc. Thus, the actual equipment (e.g., production lines, turbines, reactors, etc.) is not affected. Thus, the programmable anti-intrusion modules (PAI) (330) are positioned throughout the APCS at all points of potential vulnerability. Note that the proposed PAI modules monitor for the middle and the field levels of the APCS.

The exemplary embodiment protects the APCS against different types of threats. Some of the threats are presented by unauthorized programmable devices. These devices can be connected to the data transmission lines. The device can be any device that has an address that is not registered in the network. Typically such an intruder device is connected to the data line in parallel. Other types of threats are the authorized changes of the operational parameters made by APCS administrators by mistake. For example, mistakes in addressing the devices, changes in a network mapping or routing, mistakes in the list of forbidden commands, etc. are authorized changes made by the official operator or the administrator. Both types of threats can have a very negative impact on functionality of the APCS.

A general architecture of the APCS using the programmable anti-intrusion modules (330) is shown in FIG. 4. The SCADA (110) provides programmable support and data acquisition for the APCS. The SCADA (110) communicates with logical controller(s) (120) connected to the field level I/O devices (350). The logical controllers control (120) the field I/O points (350) connected directly to the field equipment (360) (e.g., production lines, turbines, reactors, etc.) by sending the control commands and processing the data going to the field equipment.

The programmable anti-intrusion (PAI) (330) module controls all levels of the APCS except for SCADA i.e., the middle level (PLC, or programmable automation controllers, PAC) and the field level. According to the exemplary embodiment, the PAI (330) module exchanges the collected data with the central processing module (i.e., a server (220)). The PAI module (330) is implemented as a stand-alone device with (optionally) its own control panel, depending on the complexity of the entire system. The central processing module aggregates and processes data, optionally communicates with SCADA (depending on the complexity of the entire system and the underlying technological process at issue) and with APCS operators. Generally, the decision of whether to exchange data directly, between SCADA and one or more PAI modules, or through a CPU, depends on the architecture of the system. A logical controller (120) level communicates with the field level (350), typically, using real-time data exchange protocols, the protocols with strict rules for separating data sending time intervals, the data transmission protocols with high capacity (e.g., Profibus, RTP, RTSP). The devices are synchronized and are given some time intervals in order of milliseconds. The SCADA (110) communicates with the logical controller (120) in a less precise manner; the time intervals are on the order of seconds. The logical controller receives the entire logic of the technological process from the SCADA level. The logic includes all the steps of the technological process implemented at the field level. The SCADA level sends the control commands to the controller as well.

The process logic is defined by the commands sent form the controller to the field level where the commands control the actual physical equipment. According to the exemplary embodiment, the commands are analyzed by the PAI module attached to the logical controller prior to sending the commands to the field level equipment. The commands and data can be analyzed. The PAI module can check if the command is authorized and has a correct format (i.e., is not destructive).

The PAI module also checks the addresses of the sending and the receiving devices. The PAI module can detect undocumented (unregistered) devices connected to the data transmission lines. The data is checked in terms of falsification, unauthorized updates or possible blocking of the users or devices. The PAI module can detect commands that are not allowed and check for all registered devices. Additionally, the PAI module can check the data against the templates containing expected behavior patterns, as well as based on expert assessment model and state graphs that were previously loaded into the PAI logic. Optionally, there is a possibility of interaction between the PAI and a single point of data processing (e.g., a server), or with SCADA directly, in order to determine the legitimacy of the data transmission in real time (this is usually applicable to more complex technological processes being controlled and/or to more complex APCS architectures). The pattern templates of the equipment behavior are created at the self-teaching stage of the system. The behavior templates contain data produced during the self-teaching phase.

If the logical controller supports scripts implemented using IEC 61131-3 languages, the PAI module can be connected to the controller as an interface module or as a communication processor. The controller may then have scripts that duplicate the data that needs to be processed by the PAI module. The controller script can collect data from different sources (the controller, the interface modules, etc.) and send the data to the processing module. The PAI module analyzes the data and sends the response back to the logical controller. Alternatively, the PAI module can be implemented as a network screen. In this case, the interface cables of the data lines are connected directly to the PAI module. The data is received by the controller and immediately analyzed by the PAI module. The PAI makes a decision as for sending the data along to the field level devices. According to the exemplary embodiment, the PAI module is a hardware-based device, which uses unique algorithms for analyzing the APCS protocols for detecting intrusions and unauthorized access or other unauthorized actions. The PAI module implements behavior analysis (including the teaching aspects shown in other embodiments).

The PAI module checks the commands against a database of authorized and unauthorized commands. The PAI module can check electrical parameters and detect hidden data leaks. Additionally, the PAI module can compare data received from different levels of the APCS. The PAI module can protect data exchange protocols by implementing the encryption of the data. The PAI module can exchange data with the central processing module, which can be connected to SCADA. Thus, data can be aggregated from several PAI modules and analyzed by the central processing module.

According to the exemplary embodiment, the APCS is, advantageously, protected at the middle level (automation equipment) and the filed (executive equipment) levels. Additionally, the data channels and hardware devices of the APCS are protected throughout the entire system from SCADA down to the field level. If some malware is not detected at SCADA level, it is detected and blocked at the lower levels of the APCS. The unauthorized connections to the communication lines are also detected.

Note that all of the conventional protection systems used in the APCS always address only the SCADA level. The proposed architecture addresses the APCS security at the middle and the field level as well. According to the exemplary embodiment, the data transmitted between system components of the APCS is protected from being falsified. In order to protect data, a special set of symbols can be added to check for data integrity and to authenticate the data source. The set of symbols contains the data known only to the sender and to the receiver. Alternatively, the data can be encrypted by the PAI module that encrypts only part of the network traffic. Thus, a remote user of the APCS can exchange data with other network resources without additional encryption. The PAI module also can protects APCS from unauthorized access by allocating only certain time periods for reading and writing data. The arbitrary time periods can be allocated depending on the needs of the APCS (e.g., from seconds to minutes and hours).

According to the exemplary embodiment, the PAI module prevents unauthorized use of the data channels. The protection system analyzes the data channel and detects unauthorized data transmissions that use a protocol packets different from a protocol packets of a given system. For example, if a structure of transmitted packets differs from a structure used in a given APCS, the packets are intercepted.

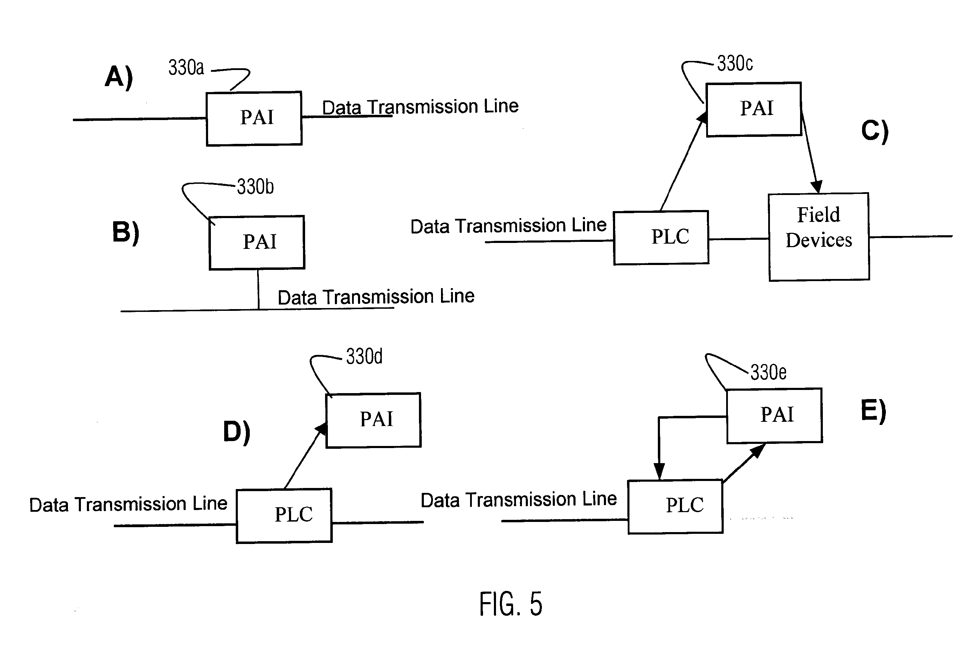

The PAI module continuously monitors the data channel, and as soon as a command appears online, the system checks if a device with a declared address has actually sent this command through the network. The device address can be checked using a heuristic template, using packet data received from a different level of the network, or by using the metadata (for example, comparing MAC and IP address). The modular structure of the intrusion detection system comprising several PAI modules allows for efficient reconfiguration in order to analyze a new protocol. According to the exemplary embodiment, one PAI module can control the transmitted data at several connection points of the system. The PAI module can be connected to the equipment or to the transmission lines using different protocols. Different exemplary ways of connectiong the PAI module (330) to possible points of vulnerability in the APCS network (100) are shown in FIG. 5.

In the exemplary embodiment shown in FIG. 5A, the PAI module (330a) is connected serially to a data transmission line. For example, the data transmission is routed through the PAI module, which may be used as a network screen. The PAI module (330a) may check the incomming commands against its database and may decline to forward those it considers harmful. It may also check electrical parameters and detect hidden data leaks. The PAI module (330a) may also be used to encrypt or authenticate (for example checking for special symbols that were added by the SCADA software) control signals across the data transmission line. In particular, the PAI module (330a) may be used to encrypt only the non-time-critical part of the transmission, thereby avoiding disruption of the production system.

In the exemplary embodiment shown in FIG. 5B, the PAI module (330b) is connected via a tee connection to a transmission line. It may still monitor all the data on the transmission line as in the embodiment according to FIG. 5A, but since it is outside the bus, it does not obstruct the realtime data flow. Blocking of harmful and/or unauthorized packets may be done, for example, by introducing noise into the data flow.

In the exemplary embodiment illustrated in FIG. 5C, the PAI module (330c) is placed between different APCS equipment, parallel to the data transmission line. For example, the PAI module (330c) may be placed petween a PLC (120) and an associated field device (350), for example a bus management device. In this arrangement, the PAI module (330c) may analyze the commands and data sent by the logical controller and may make decisions whether to send the commands and data to the field device.

In the exemplary embodiment illustrated in FIG. 5D, the PAI module (330d) is connected directly to a PLC (120) to receive data therefrom. The PAI (330d) may be connected to the PLC (120) as an interface module or as a communication processor if the PLC (120) has support for such add-ons. The PLC (120) is then modified to run scripts implemented using, for example, IEC 61131-3 languages that are used to cause data gathered from different sources (the controller itself and attached equipment) to be sent to the PAI module (330d).

In the exemplary embodiment illustrated in FIG. 5E, the PAI module (330e) is connected like in the embodiment according to FIG. 3D, but with a back channel. The PAI module may analyze the data provided by the PLC (120) and may send a response (for example a control command to either allow or discard a given instruction) back to the controller. Therefore, each command by the PLC (120) is first sent to the PAI for inspection befor it is sent down the transmission line, thus implementing security features for the PLC (120) without changing the hardware or overly changing the PLC software.

In other words, the PAI modules can be placed on the data transmission line (303a) or it can be connected to a certain point of the data transmission line (303b). The PAI module can be placed between the logical controller and the additional device (303c, for example, a bus management device). In this arrangement, the PAI module analyzes the commands and data coming out of the logical controller and makes a decision whether to send the commands or data to the field level equipment.

The PAI module can be connected to the logical controller for exchanging data (303d). The controller has connectors that are used for connecting to the PAI module. The PAI module can be also connected to the logical controller (303e) where the PAI module receives data from the logical controller and returns permission to pass the data to the field level over the transmission line. According to the exemplary embodiment, the PAI module can be connected using any of the above examples depending on the infrastructure of the APCS. The PAI module can be connected to the field level devices using external interfaces of these devices in order to control the integrity of the data sent from the logical controller to a particular device. The data exchange with the central processing module (220) can be implemented over existing data transmission lines, using a satellite channel, over protected cellular lines, etc. Thus, the system includes two or more PAI modules connected to vital points of the APCS infrastructure. The PAI modules provide data to the central processing module (i.e., a server) for processing data and detecting instances of data falsification, data modification, blocking, injection of unauthorized data or commands, etc. In other words, all possible types of threats are detected and prevented from penetration to the filed level where the actual harm can be done to the automated systems (e.g., production lines, turbines, reactors, etc.).

As is apparent from the above description, the modular structure of the HSC (200), as well as the modular architecture of every single PAI module (330) allows for efficient reconfiguration of the HSC in order to analyze and control new protocols if the control network is changed e.g. by introducing new equipment.

Those skilled in the art will appreciate that the proposed embodiments provide a complex protection of different nodes of the APCS infrastructure all the way from the SCADA level to the field level. The PAI modules can be connected to the logical controllers and control data and commands going through the controllers. All data (or partial data) going through the logical controller can be duplicated on the PAI module for checking the data for possible threats. The PAI module has functionality for blocking data transmission from the logical controller. The current data transmission can be blocked or any subsequent data transmission through the given controller can be stopped as well. The data from the logical controller can be first sent to the PAI module and only after the PAI module checks the data and returns it back to the logical controller, the controller sends the data through the data transmission line, as shown in the example E (303e). Note that the conventional systems do not have any protection devices attached to the logical controllers. Generally, no protection below the SCADA level is available in automated control systems.

An exemplary embodiment of the modular architecture of the PAI module (330) is now described in greater detail with reference to FIG. 6.

According to one embodiment, the PAI module can be implemented as a portable device, as a server based system or as a stationary system based on a personal computer. The PAI module can be also implemented as a portable device with processor based on ARM architecture.The PAI module (330) comprises a CPU (610), connected to a connection module (620) which connects to a security server (220) or an operator workstation by wire or wireless, and connected to one or more communication modules (630) which connect to the APCS network (100). The CPU may analyze the signals received from the APCS (100) via the communication modules (630) to detect illegal and/or unauthorized commands. It may then inform an operator workstation via the connection module (620). Depending on the configuration and the mode in which the PAI module (330) is operating, the CPU (610) may also send signals to the communication module (630) to block identified harmful commands, or to generate control commands for connected APCS equipment. It may also have logging and analysis capabilities. The CPU (610) may be implemented as a microporocessor based on ARM architecture, as a computing device based on x86 architecture, a microcontroller or a programmable logic device (PLD).

Each communication module (630) comprises a logic module (631) as well as analog (633) and/or digital (632) ports connected to the logic module. The logic module (631) may be implemented as a microcontroller, a PLD, or similar. Each communication module (630) may send and receive data. It may have several ports (632, 633) for connecting to the data transmission lines and/or APCS equipment based on a particular protocol, or for modulating hardware signals outside of the protocol. This outside-of-protocol capability to detect and manipulate the physical signal characteristics of the transmission line can be used to detect hidden high-frequency modulations used by intruders, as well as to introduce noise into the channel to block transmissions. The communication modules (630) may also be adapted to work with closed protocols of specific manufacturers by reverse-engineering or statistical research.

Alternatively, the communication module (630) can use native signal modulation of the hardware devices or other modulations when hidden high frequency modulations are inserted by the intruder into a regular protocol. The hidden modulation is a signal that does not correspond to the physical characteristics of the device described in the protocol. The intruder can use the hidden modulation for sending data between the two devices. The hidden modulation can be used for stealing the data using existing communication channels. The PAI modules connected to the data transmission lines detect the hidden modulations.

The logic module (631), which may be implemented as a microcontroller, a programmable logic device (PLD), or suchlike, converts the data received from the APCS network (100) in a first data format according to a protocol of the APCS network (100) into a second data format for further processing by the CPU (610). It can do so e.g by simply changing the signal levels for digital signals to TTL levels, or by providing pre-processing, including sampling and analog/digital conversion of signal voltages, widths, frequencies etc. The logic module (631) may also convert the commands received from the CPU in the second data format to be sent to the APCS network into the first data format required by the protocol on the APCS.

The PAI module (330) may also comprise I/O modules (e.g. a keyboard interface, a touch panel, a touch screen, etc.).

The PAI module (330) may be implemented as a portable device, a server based system, a stationary device in an equipment rack or as a stationary device based on a personal computer. If the PAI module (330) is implemented on a PC or server basis, this basis, while acting as the CPU (610) in this block diagram, may include communication modules (620) or connection modules (530) for Wi-Fi, Bluetooth, Ethernet, etc.

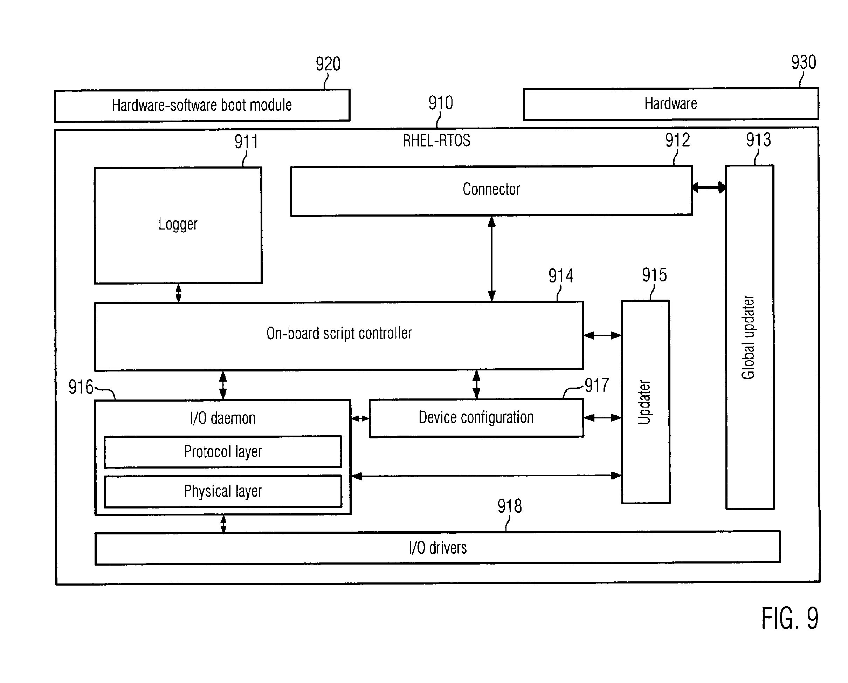

The whole PAI module (330) may be implemented on a trusted computing platform (see FIG. 9) that guarantees the integrity of the installed hard- and software if it is to be used in environments (home automation, remote equipment) where unauthorized physical access to the device is possible. This trusted platform may comprise, beside the actual trusted platform module (for example implemented according to ISO/IEC 11889), a hardware watchdog-timer, an opening sensor, trusted boot capability and/or hardware filters that insulate all components from each other. Also, to prevent crippling the APCS network (100) in the case of power failure to the PAI module (330), in this case a forced transparent data line traffic flow may be provided by the ciruit design of the communication modules (620).

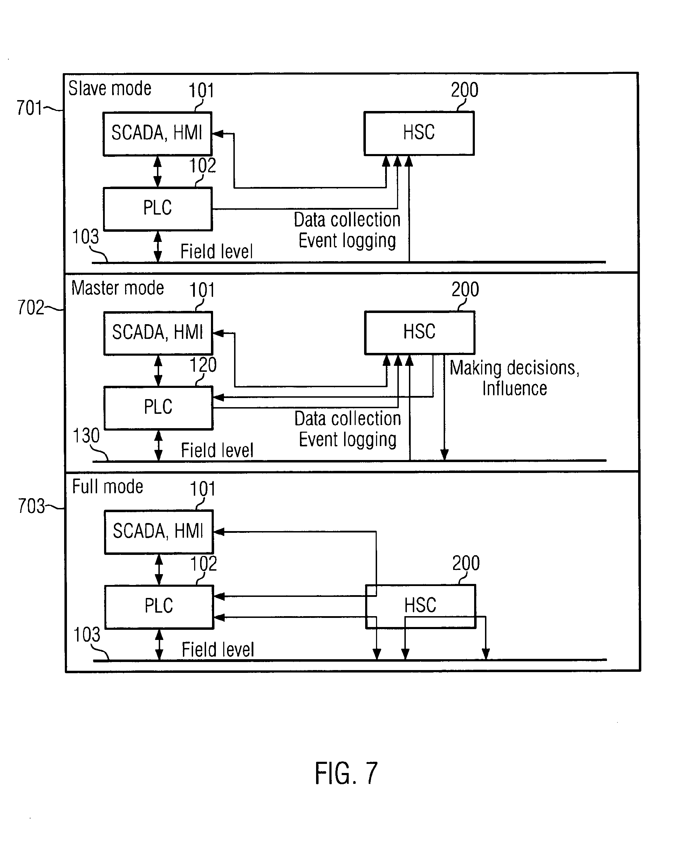

The different modes of operation of the HSC (200) connected to an APCS (100), as well as an exemplary method of introducing the HSC into the APCS to provide security without disrupting the APCS operations, are now described with reference to FIG. 7.

On the first stage (701), the security devices are working in slave mode. Slave mode comprises disabling all active features of the PAI modules (330) except for the logging of events; all data flows unobstructed, security is provided by other systems. The PAI modules (330) may log all traffic in the connected structures, or explicitly log commands and signals, and generate statistics over the low-level data. The PAI modules (330) may share their logs wirh a security server in the HSC (200). The logs then may be analysed on the server or by the PAI modules (330) themselves, yielding patterns and templates for acceptable and/or unacceptable behavior. This analysis may be heuristical or it can include expert input and state machines.

On the second stage (702), the PAI modules (330) work in master mode. Master mode comprises sending control signals to connected equipment, but not obstructing the data transmission lines, in emergency situations. Logging of events and sharing the logs with the server continues. The logs are then analyzed again to update the templates, white- and blacklists.

On the third stage (703), the PAI modules (330) work in full mode, now being able to also influence the traffic on the data transmission lines.

After updating the APCS (100) hard- and/or software, the security device(s) need(s) to be reconfigured, so the HSC (200) should again be switched to slave mode to update its decision patterns without interrupting the updated APCS (100).

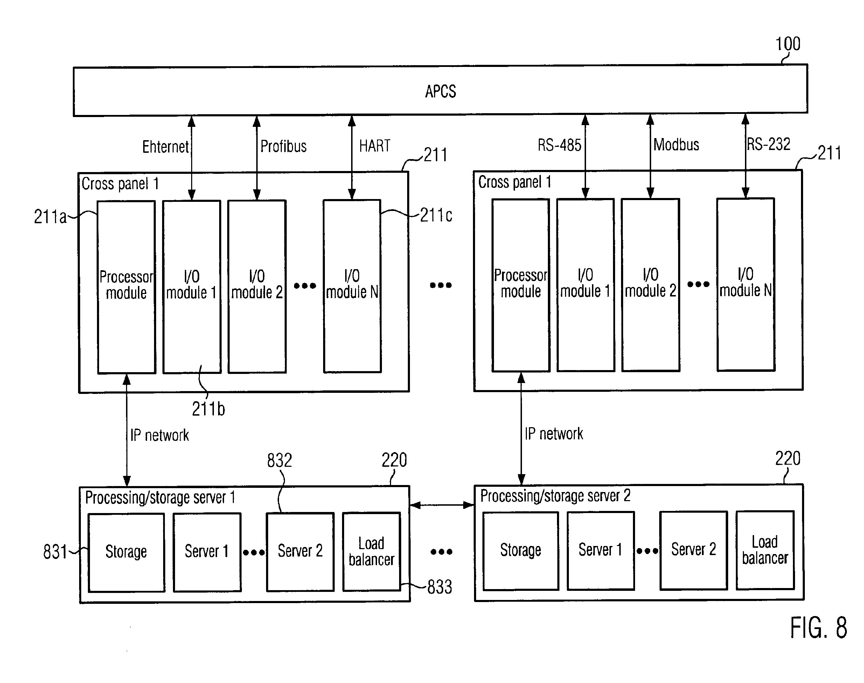

The following set of figures (Figs 8-10) describes the HSC and its components in terms of logical and functional, rather than physical, building blocks.

Figure 8 is a logical block diagram of the HSC according to an embodiment of the current invention, comprising ICS security devices (210) and servers (220).

As shown in Figure 2, the ICS security devices (210) may have a modular architecture consisting of a cross-panel (211) with common device connection bus, a processor module (211A) to process the gained information and one or more interface modules.

In particular, the one or more interface modules (211B) may provide appropriate protocol support for connecting to ACPS (100) data lines and equipment and, optionally. Furthermore, one or more interface modules (211C) may enable communication with a server (220). Communication with servers may also be realized directly from the processor module.

Servers (220) are designed for collection, analysis and storage (logging) of information gained from security devices (210) placed on different ICS levels, including field level data lines (130) and programmable logic controller (PLC) (120) level, and also for sending control commands to security devices (210). Instruments for configuring all or a part of the HSC could also be realized on the server. The security server (220) may consist of at least one storage (831), at least one server (832) and, optionally, at least one balancer (833).

The actual size of the HSC (200) implementation and the function blocks used on a given site and the number of detected malicious impacts depends on equipment, software, element base and architecture of the system under protection. Depending on a particular implementation, the functions of given HSC components may change; also function blocks may be added or removed from this schematic description. For instance, the server (220) may be missing, or a web-based interface may be added. The HSC (200) may also include antivirus software, anispam, intrusion defence (IDS, IPS), firewall, black and white lists and any combination of them.

The interaction between HSC elements may be provided as follows:
control commands may be sent from servers (220) to security devices (210);
software updates and installations may be sent from servers (220) to security devices (210);
security devices (210) may request responses from servers (220) and working terminals (230) when a treat to the APCS is detected;
notifications about alarm events may be sent from security devices (210) to servers (220) and working terminals (230);
control commands may be sent from working terminals (230) to servers (220) and security devices (210); and
commands may be sent from security devices (210) or servers (220) to third-party equipment like emergency automation or executive field level mechanisms.

In order to provide security against unauthorized access and use of undocumented features a variety of algorithms and principles may be used in the HSC (200).

Working on any level of the OSI model allows to for monitoring and comparison of data gained from different levels of the APCS (100) in order to check its validation and legitimacy.

The HSC can work with closed protocols of specific manufacturers of automation equipment, based on following approaches: Reverse-engineering of closed protocols development of appropriate security device interface modules (211 B) suited to these protocols and/or statistical research of the raw data obtained on a lower level of the protocol.

APCS control commands may be analyzed in order to find forbidden commands, unregistered sender or destination addresses, potentially malicious commands, suspicious commands (time factor and typicality of a command for certain sender are taken into consideration) and other contingencies;

Also, unauthorized or malicious attempts to re-flash the PLC (120) firmware may be intercepted based on various approaches. These approaches include establishing the legitimacy of the re-flash files based on signatures (including hash sums, parity bits or other), or based on a previously formed knowledge base, where the knowledge base may represent a set of criteria developed on the basis of firmware disassembling. Also, behavioural analysis, searching for atypical data blocks, suspicious literals, or even checking firmware and patches, based on full or partial decompilation and disassembling may be used, taking into account the APCS working logic embodied on the stage of system architecture formation. This check allows identifying firmware re-flash substitution when updating and reveals code modification not included in a planned system upgrade.

To increase security level the HSC may also carry out the following checks: Unit-tests for APCS components, description of technological process logic (setting behavioural patterns) and verification of current technological process compliance with given process description, and statistical research, providing continuous opportunities for logging any events registered by HSC (200) elements. Also, known bugs and undocumented features of deployed equipment on any APCS level from controlling level (including foreign SCADA systems) to field level of executive mechanisms and sensors may be detected by verification of equipment models and firmware versions in a database.

Also, certain modelling approaches may be employed: Calculating of the weighting coefficients for different security criteria based on expert evaluation of the security level of different components of the APCS; security analysis of the system architecture based on a threat model developed for a certain facility; and mapping the network and subnets used by APCS, including field level data lines, packages routing control.

The HSC may also provide identification of hardware and software vulnerabilities, including present remote activation vulnerabilities placed in automation equipment and software. In particular, the HSC allows for the identification of vulnerabilities present at the exact time of a security event, vulnerabilities present when repairs are being made and/or currently relevant vulnerabilities.

In order to improve HSC (200) fault tolerance, mechanisms of duplication and redundancy may be provided.

In Figure 9, a logical structure of an exemplary security device (210), based on a trusted computing platform, is shown comprising following functional blocks: A hardware-software trusted platform module (920), a hardware watchdog-timer (930), a protected OS, for example Red Hat Enterprise Linux (RHEL) + real time OS (RTOS) (910) with software installed, a logger (911), a connector (912), a global updater (913), an updater (915), an on-board script controller (914), a device configurator (917), I/O drivers (918), and an I/O daemon (916) working on Protocol layer and Network layer.

Additionally, the following optional characteristics may be implemented: The exemplary security device (210) may be equipped with an opening sensor in order to prevent unauthorized switching off or altering settings of the security device. Also, secure boot protocols may be used to prevent side effects when the device is booting. Also, to ensure greater security, the electrical circuits of the device may be designed to implement hardware filters, all components of the security device (210) may be insulated from each other to prevent inner influences. Also, in case of power failure to the security device (210), or a failure of the device itself, a forced transparent data line traffic flow may be provided in the interface modules (211 B) in order to prevent impacts on technical processes controlled by the ACS network.

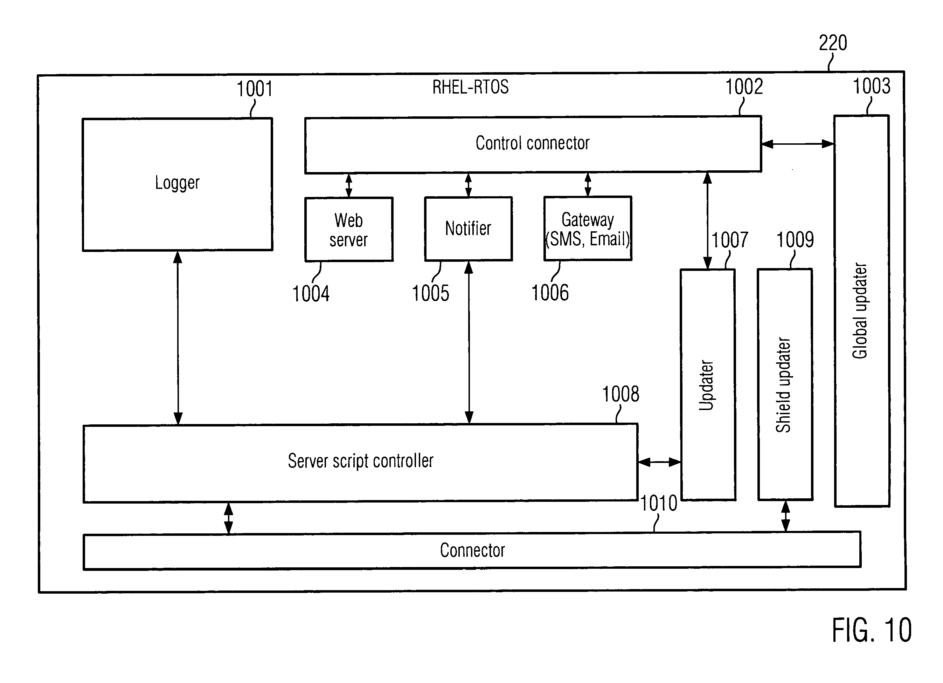

In Figure 10, the logical structure of the server (220) according to an exemplary embodiment of the current invention is shown by functional blocks. The server (220) comprises a protected OS, for example RHEL + RTOS (810) with software installed, a logger (1001), a control connector (1002), a global updater (1003), a web server (1004), a notifier (1005), gateways for notifying operators, e.g. email or SMS (1006), an updater (1007), a shield updater (1009), a server script controller (1008), and a connector (1010). The logical structure is universal.

Working terminals may be added to allow access to the server and to monitor alarm events.

As apparent from the above described embodiments, a system is provided which allows for improved security of industrial control networks, smart buildings or smart houses, at different levels (in particular the middle and field levels) by utilizing modular programmable security devices which can be connected to the control network.

In particular, the described embodiments allow for a modular security system which provides logging, alert and blocking functionality for various different industrial data protocols and also allows for easy and disruption-free installation of said security system without needing to replace production hardware.

In addition, further embodiments are shown in which said security devices are connected to data lines via a serial connection, a parallel connection or a tee connection, as well as being directly connected to the logic controllers of the industrial control network to monitor, block, authenticate or encrypt the data flow on the network, and/or to prevent the execution of unauthorized and/or harmful commands.

The disclosed security devices can be easily reconfigured to adapt to new protocols or changed network configurations as well as coordinated with a security server to allow for regular security updates and/or implement a global security policy.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the scope of the invention. Accordingly, it is to be understood that the invention is not to be limited by the specific illustrative embodiments, but only by the scope of the appended claims.

## Claims

1. A security module for use in connection with an Automated Control System, ACS, said module comprising:
a processor module, and
at least one communication module configured to connect with the ACS,
wherein the processor module is configured to receive data from the ACS via the at least one communication module, detect information data and addresses within the received data, and determine whether the received data result from unauthorized access to the ACS based on the detected information data and addresses.

2. A security module according to claim 1, wherein the at least one communication module comprises a logical module for converting a first data format of the data received from the ACS into a second data format used by the processor module, the first data format corresponding to an industrial protocol used for data communications within the ACS.

3. A security module according to claim 1, wherein the at least one communication module comprises a plurality of communication modules, each of the plurality of communication modules comprising a logical module, configured to convert a different first data format of the data received from the ACS into the second data format used by the processor module, the different first data formats corresponding to different industrial protocols used for data communications within the ACS.

4. A security module according to claim 2 or 3, wherein the industrial protocol(s) comprise(s) one or more of Fieldbus, Industrial Ethernet, Modbus, Profibus, HART, BACnet, LonWorks, EtherCAT, DeviceNet, Profinet, CANopen, RTP, and RTSP.

5. A security module according to one of the preceding claims, wherein in case that the received data result from unauthorized access, the processor module is further configured to:
send control signals to an ACS equipment corresponding to the detected addresses to instruct said equipment to disregard the related information data; and/or
refuse to forward the received data; and/or
introduce noise into data lines of the ACS to disrupt the communication of the related data within the ACS; and/or
inform an operator.

6. A security module according to one of the preceding claims, further comprising:
a connection module configured to communicate at least a part of the received data and detected information data and detected addresses to a server.

7. A security module according to claim 6, wherein the processor module is further configured to log security events derived from the received data, and the connection module is further configured to communicate the logged security events to the server.

8. A security module according to one of the preceding claims, further comprising a user-interface module comprising one or more of the following: a display screen, a keyboard interface, a touch panel or a touchscreen.

9. A security module according to one of the preceding claims, wherein the at least one communication module is configured to connect with the ACS by connecting with data transmission lines of the ACS via a serial connection, a parallel connection, or a tee connection, or by directly connecting with an ACS device.

10. A security module according to claim 9, wherein the ACS device comprises one of a logic controller of the ACS and a field device of the ACS, and the data transmission lines comprise one of data transmission lines between a supervisory control and data acquisition entity of the ACS and a logic controller of the ACS, and data transmission lines between a logic controller of the ACS and a field device of the ACS.

11. A security module according to one of the preceding claims, configured to be operated in a slave mode in which the received data are analyzed to determine a set of allowed information data and/or addresses and/or conditions of technological processes, and a master mode in which it is determined that the received data result from unauthorized access if the received data comprise information data and/or addresses and/or conditions of technological processes that are not comprised in the set of allowed information data and/or addresses and/or conditions of technological processes.

12. A security module according to one of the preceding claims, wherein the processor module is configured to determine whether the received data result from unauthorized access by one or more of:
determining whether the received data comprise information data and/or addresses and/ or conditions of technological processes that are not comprised in a set of allowed information data and/or addresses and/or conditions of technological processes;
determining whether the detected addresses correspond to an unregistered device;
determining whether the received data are in a data format that does not comply with a predetermined protocol.

13. A system comprising one or more security modules according to one of the preceding claims and a security server communicatively coupled to the communication modules of the one or more security modules.

14. A method for providing security to an automated control system, ACS, the method comprising:
connecting at least one of the security modules according to one of claims 1 to 10 to the ACS;
operating the at least one security module in a slave mode in which the received data are analyzed to determine a set of allowed information data and/or addresses and/or conditions of technological processes; and
operating the at least one security module in a master mode in which upon determining that received data comprise information data and/or addresses and/or conditions of technological processes that are not comprised in the set of allowed information data and/or addresses and/or conditions of technological processes, a communication of the respective data to a receiving device corresponding to the respective addresses is disturbed.

15. A method according to claim 14, wherein disturbing the communication of the respective data to the receiving device comprises:
sending control signals to the receiving device to instruct said receiving device to disregard the respective data and/or conditions of technological processes; and/or
refusing to forward the respective data; and/or
introducing noise into data lines of the ACS to disrupt the communication of the respective data within the ACS.
